# EUROPÄISCHE PATENTSCHRIFT

(11) **EP 0 721 694 B1**
(45) Veröffentlichungstag und Bekanntmachung des Hinweises auf die Patenterteilung: **10.12.1997**
(21) Anmeldenummer: 94928273.5
(22) Anmeldetag: 28.09.1994
(51) Int. Cl.: H02P 3/06

(54) **ELEKTROMOTOR MIT ELEKTRODYNAMISCHER BREMSE**
ELECTRIC MOTOR WITH AN ELECTRODYNAMIC BRAKE
MOTEUR ELECTRIQUE POURVU D'UN FREIN ELECTRODYNAMIQUE

(30) Priorität: 30.09.1993 DE 4333294
(43) Veröffentlichungstag der Anmeldung: 17.07.1996
(73) Patentinhaber: ROBERT BOSCH GMBH, 70442 Stuttgart (DE)
(72) Erfinder: SEEL, Ottmar, D-70771 Leinfelden-Echterdingen (DE)
(86) Internationale Anmeldenummer: DE9401147
(87) Internationale Veröffentlichungsnummer: WO9509477

(56) Entgegenhaltungen:
- EP-A- 0 551 896
- DE-A- 2 842 145
- DE-A- 3 539 841

## Beschreibung

### Stand der Technik

Die Erfindung geht aus von einem Elektromotor mit einer elektrodynamischen Bremse und mit einer Steuerung, die über ein Leistungsstellglied den Motorstrom bzw. dessen Drehzahl steuert. Aus der DE 3539841 C2 ist schon eine Bremseinrichtung für einen Reihenschlußmotor bekannt, bei dem im Bremsbetrieb die Feldwicklung umgepolt und über einen Halbleiterschalter in Reihe zum Anker geschaltet wird. Im Motorbetrieb ist dagegen der Leistungshalbleiter praktisch wirkungslos, da er einen separaten Stromkreis zum Motor bildet. Soll der Motor drehzahlgesteuert sein, dann ist eine Steuerung mit einem weiteren Leistungsstellglied erforderlich. wegen der zwei zu verwendenden Leistungsstellglieder ist der Schaltungsaufwand für den Motor- und Bremsbetrieb des Elektromotors relativ aufwendig.

### Vorteile der Erfindung

Der erfindungsgemäße Elektromotor mit den kennzeichnenden Merkmalen des Hauptanspruchs hat demgegenüber den Vorteil, daß sowohl im Motor- als auch im Bremsbetrieb das gleiche Leistungsstellglied verwendbar ist. Besonders vorteilhaft ist, daß durch die doppelte Verwendung des Leistungsstellgliedes sich nicht nur der Schaltungsaufwand verringert, sondern auch auf einen weiteren Kühlkörper verzichtet werden kann. Ein Kühlkörper benötigt in der Regel viel Platz und ist daher unerwünscht.

Aus der DE 28 42 145 A1 ist ein Universalmotor mit der Schaltung bekannt, bei dem zum Bremsen mittels eines Umschalters der Anker umgepolt wird. Ein Ausführungsbeispiel des Universalmotors zeigt im Motorstromkreis ein Leitungsstellglied, desssen Stromfluß eine Steuerung in Abhängigkeit von der Drehzahl des Ankers steuert. Im Bremsbetrieb greift die Steuerung an dem Stellglied den von der Drehzahl abhängigen Strom ab und wirkt in diesem Fall als Bremswächter.

Durch die in den abhängigen Ansprüchen aufgeführten Maßnahmen sind vorteilhafte Weiterbildungen und Verbesserungen des im Hauptanspruch angegebenen Elektromotors möglich. Besonders vorteilhaft ist, daß das Leistungsstellglied im Bremsbetrieb den Erregerstrom zum Aufbau des Magnetfeldes steuert. Über den Steuereingang des Leistungsstellgliedes läßt sich vorteilhaft der Verlauf des Bremsstromes steuern. Besonders läßt sich dadurch auch der Verlauf einer bestimmten Erregerstromkurve steuern. Dies erfolgt vorzugsweise durch eine Phasenanschnittsteuerung, die ohnehin im Motorbetrieb zur Drehzahlsteuerung vorgesehen ist.

Durch die vorgesehene Steuerung des Bremsstromes kann die Bremszeit zum Abbremsen des Motors mit einem eventuell in Verbindung stehenden Schneid- oder Sägewerkzeug vorgegeben werden. Insbesondere bei Kreissägen, Heckenscheren oder Rasenmähern ist ein sehr schnelles Abbremsen des laufenden Werkzeuges erwünscht, um die Verletzungsgefahr für den Bediener gering zu halten.

Vorteilhaft ist weiter, daß die Steuerung Mittel zur Messung des Bremsstromes aufweist. Mit Hilfe dieser Mittel kann vorteilhaft der Erregerstrom einer vorgegebenen Kurve angepaßt oder auch konstant gehalten werden. Eine Konstanthaltung des Bremsstromes möglichst über den ganzen Bremsvorgang ist erwünscht, um die hohen Stromspitzen beim Einleiten des Bremsvorganges zu vermeiden. Sie verursachen extremes Bürstenfeuer, das eine ungleichmäßige und überhöhte Abnutzung der Kohlen verursacht. Dadurch wird der Elektromotor oder auch ein Elektrohandwerkzeug relativ schonend abgebremst.

Vorteilhaft ist weiter, daß ein erster Umschalter verwendet wird, der im Motorbetrieb den Motorstrom über das Leistungsstellglied leitet bzw. im Bremsbetrieb die Feldwicklung oder Teile von dieser so umschaltet, daß der Erregerstrom das Bremsmagnetfeld aufbauen kann.

Um Überlastung der Feldwicklungen zu vermeiden, ist weiter vorgesehen, einen Strombegrenzungswiderstand in den Erregerstromkreis zu schalten. Ebenso kann für den Bremsvorgang in dem Ankerkreis ein Bremswiderstand geschaltet werden. Dadurch ist eine getrennte Einstellung sowohl des Erregerstromes als auch des Bremsstromes möglich.

Eine bevorzugte Anwendung des Elektromotors ist in einem Elektrohandwerkzeug gegeben, bei dem das eingesetzte Werkzeug möglichst rasch abgebremst werden soll, um die Verletzungsgefahr zu vermindern. Dies ist vorzugsweise bei einer Säge, einem Schleifer, einem Rasenmäher u.a. erwünscht.

### Zeichnung

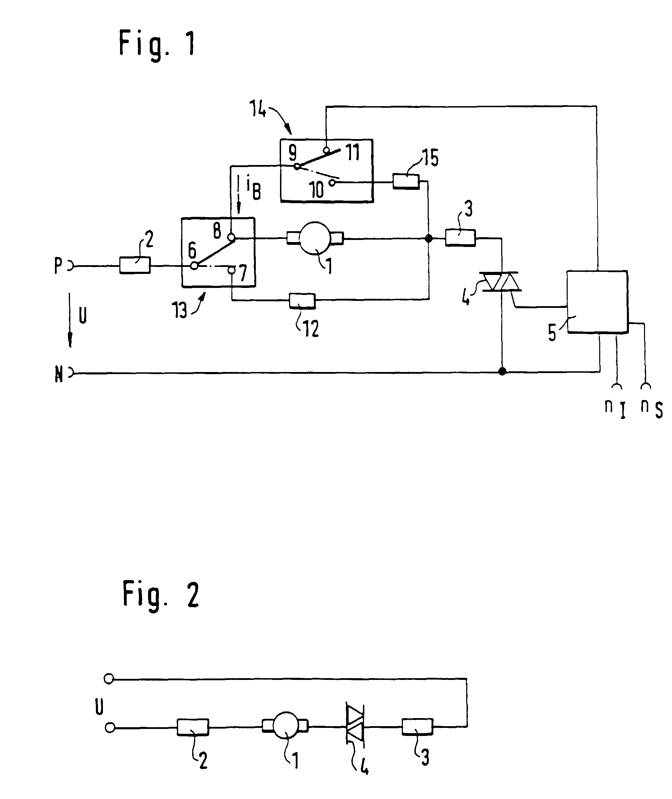

Ein Ausführungsbeispiel der Erfindung ist in der Zeichnung dargestellt und in der nachfolgenden Beschreibung näher erläutert. Die Figur 1 zeigt ein erstes Ausführungsbeispiel mit einem Blockschaltbild und Figur 2 zeigt ein zweites Ausführungsbeispiel.

### Beschreibung des Ausführungsbeispiels

Die Figur zeigt einen Elektromotor mit einem Anker 1, einer ersten Feldspule 2 und einer zweiten Feldspule 3 in Reihenschaltung. Zwischen der erste Feldspule 2 und dem Anker 1 ist ein erster Umschalter 13 geschaltet, bei dem im Motorbetrieb die Kontakte 6, 8 geschlossen sind. Die zweite Feldwicklung 3 ist über ein Leistungsstellglied 4, vorzugsweise einem Triac oder Thyristor, mit einer Netzklemme N verbunden. Die erste Feldwicklung 2 ist mit einer zweiten Netzklemme P verbunden. Der Steuereingang des Leistungsstellgliedes 4 ist mit einer Steuerung 5 verbunden, die einerseits ebenfalls auf die N-Leitung des Netzes geführt ist. Die Steuerung 5 hat zusätzliche Eingänge für die gemessene Istdrehzahl n_{I} und Solldrehzahl n_{S}. Des weiteren ist die Steuerung 5 mit einem zweiten Umschalter 14 verbunden, der im Motorbetrieb über die geschlossenen Kontakte 9, 11 die Spannung am Anker 1 erfaßt. Im Bremsbetrieb ist der Kontakt 9, 10 geschlossen und dadurch ein Bremswiderstand 15 dem Anker 1 parallel geschaltet. Als Bremswiderstand 15 kann vorteilhaft auch eine Diode verwendet werden, die den Bremsstrom gleichrichtet, da sie nur eine Halbwelle durchläßt. Andererseits hat ein ohmscher Widerstand 15 den Vorteil, daß er beim Kurzschluß des Stellgliedes 4 (Triac) als Sicherung wirkt.

Dabei kann diese Dimensionierung auf den Erreger- und Bremsstrom abgestimmt sein. Da nun der Kontakt 9, 11 des zweiten Umschalters 14 offen ist, erhält der Steuereingang der Steuerung 5 kein Signal. Dadurch kann die Steuerung 5 erkennen, ob gerade ein Motor- oder Bremsbetrieb vorliegt.

Falls die Ist-Drehzahl nicht direkt erfaßt wird, könnte hier auch die Ankerspannung im Motorbetrieb als Regelgröße verwendet werden (Kontakt 9/11 geschlossen).

Der zweite Umschaltkontakt 6, 7 des ersten Umschalters 13 ist über einen Strombegrenzungswiderstand 12 ebenfalls dem Anker 1 parallel geschaltet. Der Strombegrenzungswiderstand 12 kann einen bestimmten Wert, vorzugsweise auch den Wert 0 Ohm haben.

Die Steuerung 5 ist als Phasenanschnittsteuerung ausgebildet und ist beispielsweise aus der DE-PS 3739623 bekannt. Es kann jedoch auch jede andere geeignete Steuerung 5 für das Leistungsstellglied 4 verwendet werden.

Im folgenden wird die Funktionsweise dieser Schaltungsanordnung beschrieben. Im Motorbetrieb ist der Kontakt 6, 8 des ersten Umschalters 13 geschlossen, ebenso der Kontakt 9, 11 des zweiten Umschalters 14. An dem Elektromotor liegt nun über die Klemme P, N die Netzspannung U an. Der Strom fließt nun über die erste Feldwicklung 2, den Anker 1, die zweite Feldwicklung 3 und das Leistungsstellglied 4 zurück über den zweiten Netzanschluß N. Mittels der Steuerung 5 kann nun eine Drehzahl eingestellt werden, die über den Eingang n_{S} beispielsweise durch ein Stellglied vorgegeben ist. Die Ist-drehzahl wird beispielsweise über einen Tachogenerator einer Motorwelle abgegriffen und dem Eingang n_{I} der Steuerung 5 zugeführt, so daß die Steuerung einen Soll-/Istvergleich durchführen kann. Dieser normale Motorbetrieb ist per se bekannt. Des weiteren erfaßt die Steuerung 5 über die geschlossene Klemme 9, 11 des zweiten Umschalters 14 die Ankerspannung und erhält dadurch die Information über den Motor- oder Bremsbetrieb.

Für den Bremsbetrieb wird der Motor vom Netz fremderregt. Beim Umschalten in den Bremsbetrieb ist nun der Kontakt 6, 7 (gestrichelt) des ersten Umschalters 13 bzw. 9, 10 (gestrichelt) des zweiten Umschalters 14 geschlossen. Der Erregerstrom fließt nun von der Netzklemme P über die erste Feldwicklung 2, eventuell den Strombegrenzungswiderstand 12 und die zweite Feldwicklung 3 sowie das Leistungsstellglied 4. Mit dem Erregerstrom wird das Magnetfeld zum Aufbau des Bremsmomentes erzeugt. Zusätzlich fließt über den Anker 1 und den Bremswiderstand 15 sowie die Kontakte 9, 10 der Bremsstrom, der im wesentlichen durch den Bremswiderstand 15 bestimmt ist. Die Steuerung erfaßt durch den offenen Kontakt 9, 11, daß auf den Bremsbetrieb umgeschaltet wurde. Sie gibt nun für das Leistungsstellglied den Erregerstrom vor, so daß sich ein bestimmtes Abbremsmoment einstellt. Der Erregerstrom ist im Bremsfall ein pulsierender Gleichstrom, wobei jede zweite Halbwelle vorzugsweise mit einem Mikrorechner getriggert wird. Der Wert für den Erregerstrom, seinem vorgegebenen Verlauf, wobei auch der Erregerstrom konstant gehalten werden kann, ist in einem nicht dargestellten Speicher abgelegt. Im einfachsten Fall kann auch ein Komparator verwendet werden, der einen Sollwert für den Erregerstrom vorgibt. Auch ist ein nicht dargestelltes Zeitglied, beispielsweise ein Monoflop, vorgesehen, mit dem eine maximale Bremszeit eingestellt wird. Die Bremszeit wird dabei so gewählt, daß der Elektromotor sicher zum Stehen kommt. Entsprechend kann dann der maximale Erregerstrom oder auch eine entsprechende Spannung, die mit einem nicht dargestellten Tachogenerator erfaßbar ist, für den Bremsstrom für eine bestimmte Zeit vorgegeben werden. Nach Ablauf dieser vorgegebenen Zeit wird der Stromfluß in der Feldspule 2, 3 unterbrochen, so daß wegen fehlender Erregung die Bremswirkung nachläßt.

Es ist weiter vorgesehen, die Dauer des Bremsvorgangs mittels des Tachogenerators zu erfassen und damit die Dauer des Bremsstromes zu steuern.

In weiterer Ausgestaltung der Erfindung ist vorgesehen, über den Bremswiderstand 15 die Spannung zu messen, die ein Maß für den Bremsstrom ist. Dadurch kann der Bremsstrom mit Hilfe des Erregerstroms besonders einfach geregelt werden. Die Messung des Bremsstromes ist besonders einfach bei asymmetrisch geschalteten Feldspulen, d.h. wenn gemäß Figur 2 zwischen dem Anker 1 und einer Feldspule 2, 3 das Stellglied 4 geschaltet ist.

## Patentansprüche

1. Elektromotor mit einer elektrodynamischen Bremseinrichtung, wobei ein im Hauptstromkreis des Elektromotors liegendes Leistungsstellglied (4) in Serie geschaltet ist, mit einer Steuerung (5), die mit einem Eingang des Leistungsstellgliedes verbunden ist und im Motor- oder im Bremsbetrieb den Motorstrom oder die Motorspannung über das gleiche Leistungsstellglied steuert oder regelt und mit einem ersten Umschalter (13) für den Anker (1) des Elektromotors, dadurch gekennzeichnet, daß dem Anker (1) des Elektromotors ein zweiter Umschalter (14) derart parallel geschaltet ist, daß der mit einem ersten Kontakt (9, 10) des zweiten Umschalters (14) und dem Anker gebildete Stromkreis im Motorbetrieb unterbrochen und im Bremsbetrieb geschlossen ist und daß der zweite Umschalter (14) einen weiteren Kontakt (9, 11) aufweist, der im Motorbetrieb einen Steuereingang der Steuerung (5) mit einer Netzklemme (P) verbindet und im Bremsbetrieb diese Verbindung unterbricht.

2. Elektromotor nach Anspruch 1, dadurch gekennzeichnet, daß die Steuerung (5) nach dem Prinzip des Phasenanschnitts ausgebildet ist und im Bremsbetrieb den Erregerstrom des Elektromotors über den Steuereingang des Leistungsstellgliedes (4) steuert.

3. Elektromotor nach Anspruch 2, dadurch gekennzeichnet, daß die Steuerung (5) den Bremsstrom nach einem vorgegebenen Erregerstromverlauf steuert.

4. Elektromotor nach Anspruch 2 oder 3, dadurch gekennzeichnet, daß die Steuerung (5) den Bremsstrom für eine vorgegebene maximale Abbremszeit steuert.

5. Elektromotor nach einem der vorhergehenden Ansprüche, dadurch gekennzeichnet, daß die Steuerung (5) Mittel zur Messung des Bremsstromes aufweist.

6. Elektromotor nach Anspruch 5, dadurch gekennzeichnet, daß die Steuerung (5) dem Bremsstrom erfaßt und diesen über die Einstellung des Erregerstroms konstant hält.

7. Elektromotor nach einem der vorhergehenden Ansprüche, dadurch gekennzeichnet, daß der erste Umschalter (13) zwischen einer ersten Feldwicklung (2) und dem Anker (1) geschaltet ist und daß im Bremsbetrieb der erste Umschalter (13) die erste Feldwicklung (2) vom Anker trennt und in Reihe zu einem Erregerstromkreis (3, 4, 6, 7, 2) schaltet.

8. Elektromotor nach Anspruch 7, dadurch gekennzeichnet, daß in den Erregerstromkreis (3, 4, 6, 7, 2) ein Strombegrenzungswiderstand (12) schaltbar ist.

9. Elektromotor nach Anspruch 7 oder 8, dadurch gekennzeichnet, daß im Ankerstromkreis (1, 10, 9, 8) ein Bremswiderstand (15) schaltbar ist.

10. Elektromotor nach einem der vorhergehenden Ansprüche, dadurch gekennzeichnet, daß der Elektromotor für ein Elektrohandwerkzeug, vorzugsweise eine Säge, Schleifer oder Rasenmäher o.ä., verwendbar ist.

## Claims

1. Electric motor with an electrodynamic braking device, a power actuator (4) situated in the main circuit of the electric motor being connected in series, having a controller (5), which is connected to an input of the power actuator and, during motor or braking operation, controls or regulates the motor current or the motor voltage via the same power actuator, and having a first changeover switch (13) for the armature (1) of the electric motor, characterized in that a second changeover switch (14) is connected in parallel with the armature (1) of the electric motor in such a way that the circuit formed by a first contact (9, 10) of the second changeover switch (14) and the armature is interrupted during motor operation and closed during braking operation, and in that the second changeover switch (14) has a further contact (9, 11) which connects a control input of the controller (5) to a line terminal (P) during motor operation, and interrupts this connection during braking operation.

2. Electric motor according to Claim 1, characterized in that the controller (5) is designed in accordance with the phase-gating principle and, during braking operation, controls the excitation current of the electric motor via the control input of the power actuator (4).

3. Electric motor according to Claim 2, characterized in that the controller (5) controls the braking current in accordance with a prescribed excitation-current characteristic.

4. Electric motor according to Claim 2 or 3, characterized in that the controller (5) controls the braking current for a prescribed maximum braking time.

5. Electric motor according to one of the preceding claims, characterized in that the controller (5) has means for measuring the braking current.

6. Electric motor according to Claim 5, characterized in that the controller (5) detects the braking current and holds the latter constant via the setting of the excitation current.

7. Electric motor according to one of the preceding claims, characterized in that the first changeover switch (13) is connected between a first excitation winding (2) and the armature (1), and in that during braking operation the first changeover switch (13) isolates the first excitation winding (2) from the armature and connects it in series with an excitation circuit (3, 4, 6, 7, 2).

8. Electric motor according to Claim 7, characterized in that a current-limiting resistor (12) can be switched into the excitation circuit (3, 4, 6, 7, 2).

9. Electric motor according to Claim 7 or 8, characterized in that a braking resistor (15) can be switched in the armature circuit (1, 10, 9, 8).

10. Electric motor according to one of the preceding claims, characterized in that the electric motor can be used for an electric hand tool, preferably a saw, grinder or lawnmower or the like.

## Revendications

1. Moteur électrique comprenant :
• une installation de frein électrodynamique,
• un organe de réglage de puissance (4) étant prévu dans le circuit principal du courant du moteur électrique, en série,
• une commande (5) reliée à une entrée de l'organe de réglage de puissance et qui en mode moteur ou en mode frein commande ou règle le courant du moteur ou la tension du moteur par le même organe de réglage de puissance et un premier commutateur (13) pour l'induit (1) du moteur électrique,
caractérisé en ce qu'
un second commutateur (14) est branché en parallèle sur l'induit (1) du moteur électrique et le circuit électrique formé par le premier contact (9, 10) du second commutateur (14) et l'induit est ouvert en mode moteur, ce circuit étant fermé en mode frein et le second commutateur (14) comporte un autre contact (9, 11) qui relie une entrée de commande de la commande (5) à une borne de réseau (P) en mode moteur et coupe cette liaison en mode frein.

2. Moteur électrique selon la revendication 1,
caractérisé en ce que
la commande (5) travaille sur un principe du découpage de phase et en mode de freinage, elle commande le courant d'excitation du moteur électrique par l'entrée de commande de l'élément de réglage de puissance (4).

3. Moteur électrique selon la revendication 2,
caractérisé en ce que
la commande (5) commande le courant du mode frein selon une courbe de courant d'excitation prédéterminée.

4. Moteur électrique selon les revendications 2 ou 3,
caractérisé en ce que
la commande (5) commande le courant de freinage pour assurer un temps de freinage maximum prédéterminé.

5. Moteur électrique selon quelconque des revendications précédentes,
caractérisé en ce que
la commande (5) comporte des moyens pour mesurer le courant de freinage.

6. Moteur électronique selon la revendication 5,
caractérisé en ce que
la commande (5) détecte le courant de freinage et maintient celui-ci constant pendant que s'établit le courant d'excitation.

7. Moteur électronique selon l'une quelconque des revendications précédentes,
caractérisé en ce que
le premier commutateur (13) est branché entre un premier enroulement de champs (2) et l'induit (1) et en mode de freinage, le premier commutateur (13) coupe le premier enroulement de champs (2) par rapport à l'induit et le branche en série sur le circuit du courant d'excitation (3, 4, 6, 7, 2).

8. Moteur électronique selon la revendication 7,
caractérisé en ce qu'
une résistance de limitation d'intensité (12) peut être branchée dans le circuit du courant d'excitation (3, 4, 6, 7, 2).

9. Moteur électronique selon les revendications 7 ou 8,
caractérisé en ce qu'
une résistance de freinage (15) peut être branchée dans le circuit du courant d'induit (1, 10, 9, 8).

10. Moteur électronique selon l'une quelconque des revendications précédentes,
caractérisé en ce que
le moteur électrique est applicable à un outil électrique à main de préférence une scie, une ponceuse ou une tondeuse à gazon.
